# EUROPEAN PATENT SPECIFICATION

(11) **EP 1 526 944 B1**
(45) Date of publication and mention of the grant of the patent: **14.06.2006**
(21) Application number: 03771078.7
(22) Date of filing: 21.07.2003
(51) Int. Cl.: B23K 35/02, B23K 35/28, C25D 5/12

(54) **BRAZING PRODUCT AND METHOD OF ITS MANUFACTURE**
HARTLÖTWEKSTOFF UND DESSEN HERTSTELLUNGSVERFAHREN
PRODUIT DE BRASAGE ET PROCEDE DE FABRICATION DE CE PRODUIT

(30) Priority: 24.07.2002 EP 02078053
(43) Date of publication of application: 04.05.2005
(73) Proprietor: Corus Aluminium Walzprodukte GmbH, 56070 Koblenz (DE)
(72) Inventor: WITTEBROOD, Adrianus, Jacobus, NL-1991 HB Velserbroek (NL); WIJENBERG, Jacques, Hubert, Olga, Joseph, NL-1019 PE Amsterdam (NL); MOOIJ, Joop, Nicolaas, NL-1902 JP Castricum (NL)
(74) Representative: van der Donk, Henricus Matheus
(86) International application number: PCT/EP2003/008073
(87) International publication number: WO 2004/011189

(56) References cited:
- WO-A-00/71784
- WO-A-01/68312
- WO-A-02/38326
- US-A- 2 821 505

## Description

The invention relates to a brazing product, such as a brazing sheet product, comprising an aluminium layer being made of an aluminium alloy comprising silicon in an amount in the range of 4 to 14% by weight, and a further layer comprising nickel on the outer surface of the AlSi-alloy layer, wherein taken together the aluminium layer and all layers exterior thereto form a filler metal for a brazing operation. The invention also relates to a method of manufacturing such a brazing product, and to a brazed assembly comprising at least one component made of this brazing product.

Aluminium and aluminium alloys can be joined by a wide variety of brazing and soldering processes. Brazing, by definition, employs a filler metal or alloy having a liquidus above 450°C and below the solidus of the base metal. Brazing is distinguished from soldering by the melting point of the filler metal: a solder melts below 450°C. Soldering processes are not within the field of the present invention.

Brazing products, and in particular brazing sheet products, find wide applications in heat exchangers and other similar equipment. Conventional brazing sheet products have a core or base sheet, typically an aluminium alloy of the Aluminium Association ("AA")3xxx-series, having on at least one surface of the core sheet an aluminium clad layer, the aluminium clad layer being made of an AA4xxx-series alloy comprising silicon in an amount in the range of 4 to 14% by weight, and preferably in the range of 7 to 14% by weight. The aluminium clad layer may be coupled to the core or base alloy in various ways known in the art, for example by means of roll bonding, cladding, explosive cladding, thermal spray-forming or semi-continuous or continuous casting processes.

Controlled Atmosphere Brazing ("CAB") and Vacuum Brazing ("VB") are the two main processes used for industrial scale aluminium brazing. Industrial vacuum brazing has been used since the 1950's, while CAB became popular in the early 1980's after the introduction of the NOCOLOK (trade mark) brazing flux. Vacuum brazing is an essentially discontinuous process and puts high demands on material cleanliness. The disruption of the aluminium oxide layer present is mainly caused by the evaporation of magnesium from the clad alloy. There is always more magnesium present in the furnace than necessary. The excess magnesium condenses on the cold spots in the furnace and has to be removed frequently. The capital investment for suitable equipment is relatively high.

CAB requires an additional process step prior to brazing as compared to VB, since a brazing flux has to be applied prior to brazing. A brazing flux for use in brazing aluminium alloys usually consist of mixtures of alkali earth chlorides and fluorides, sometimes containing aluminium fluoride or cryolite. CAB is essentially a continuous process in which, if the proper brazing flux is being used, high volumes of brazed assemblies can be manufactured. The brazing flux dissolves the oxide layer at brazing temperature allowing the clad alloy to flow properly. When the NOCOLOK flux is used the surface needs to be cleaned thoroughly prior to flux application. To obtain good brazing results the brazing flux has to be applied on the total surface of the brazed assembly. This can cause difficulties with certain types of assemblies because of their design. For example, because evaporator type heat exchangers have a large internal surface, problems can arise because of poor access to the interior. For good brazing results the flux has to adhere to the aluminium surface before brazing. Unfortunately the brazing flux after drying can easily fall off due to small mechanical vibrations. During the brazing cycle, corrosive fumes such as HF are generated. This puts a high demand on the corrosion resistance of the materials applied for the furnace.

Ideally, a material should be available that can be used for CAB but does not have the requirements and defects of the known brazing flux application. Such a material can be supplied to a manufacturer of brazed assemblies and is ready to use directly after forming of the assembly parts. No additional brazing fluxing operations have to be carried out. Presently, only one process for fluxless brazing is used on an industrial scale. The material for this process can be for example standard brazing sheet made from an AA3xxx-series core alloy clad on one or both sides with a cladding of an AA4xxx-series alloy. Before the brazing sheet can be used the surface has to be modified in such a way that the naturally occurring aluminium oxide layer does not interfere during the brazing cycle. The method of achieving good brazing is to deposit a specific amount of nickel on the surface of the clad alloy. If properly applied, the nickel reacts, presumably exothermically, with the underlying aluminium. When electroplating is used the adherence of the nickel should be sufficient to withstand typical shaping operations being used in, for example, heat exchanger manufacture.

Processes for nickel-plating in an alkaline solution of aluminium brazing sheet are known from each of US-A-3,970,237, US-A-4,028,200, and US-A-4,164,454. According to these documents, nickel or cobalt, or combinations thereof, are most preferably deposited in combination with lead. The lead addition is used to improve the wetteability of the aluminium clad alloy during the brazing cycle. An important characteristic of these plating processes is that the nickel is preferentially deposited on the silicon particles of the aluminium clad alloy. To obtain sufficient nickel for brazing, the surface of the aluminium clad alloy should contain a relatively large number of silicon particles to act as nuclei for the nickel deposition. It is believed that to obtain sufficient nucleation sites a part of the aluminium in which the silicon particles are embedded should be removed before pickling by chemical and/or mechanical pre-treatment. This is believed a necessary condition to obtain sufficient silicon coverage to serve as nuclei for the plating action of the brazing or clad alloy. On a microscopic scale the surface of the Si-containing cladding of the brazing sheet is covered with nickel-lead globules. However, the use of lead for the production of a suitable nickel and/or cobalt layer on brazing sheet has several disadvantages. The use of lead for manufacturing products, such as automotive products, is undesirable and it is envisaged that in the very near future there might possibly even be a ban on lead comprising products or products manufactured via one or more intermediate processing steps comprising lead or lead-based components.

The international PCT patent application no. WO-00/71784, J.N. Mooij *et al.,* incorporated herein by reference in its entirety, discloses a brazing sheet product and a method of its manufacture. In this brazing sheet product there is provided a very thin bonding layer, preferably applied by plating, comprising zinc or tin between the AlSi-alloy clad layer and the nickel layer in order to improve the bonding of the nickel layer. The addition of lead to the nickel layer has been replaced by the addition of bismuth while maintaining the excellent brazeability characteristics of the brazing sheet product.

A drawback of the known brazing sheet products having a layer comprising nickel is the limited corrosion life of brazed products in a SWAAT-test in accordance with ASTM G-85. Corrosion lifetimes without perforations are typically in the range of 4 days and thereby restricting possible interesting applications of the brazing product. For several applications of the known nickel-plated brazing sheet in brazed products such a relatively short corrosion lifetime is not detrimental. However, a good corrosion resistance is considered a valuable property for brazing products used in, amongst other things, heat exchangers, such as radiators and condensers. These heat exchangers are exposed to a severe external corrosive attack by, e.g., de-icing road salt.

WO-A-02 38 326 discloses a brazing sheet comprising a core sheet of Al alloy clad with layers of Al-Si alloy which carry a first bonding layer of Zn or Sn, a second layer of Ni and an outer layer of e.g. bronze. During the brazing operation diffusion may occur and form an outer layer comprising Cu, Sn and Ni..

It is an object of the present invention to provide a Ni-plated brazing sheet product for use in a brazing operation, ideally a fluxless CAB brazing operation, and wherein the brazing sheet product has an improved post-braze corrosion resistance when measured in a SWAAT-test in accordance with ASTM G-85.
It is another object of the present invention to provide a brazing sheet product comprising a core sheet made of an aluminium alloy coupled on at least one surface of the core sheet to an aluminium clad layer (also known as an aluminium cladding), the aluminium clad layer being made of an aluminium alloy comprising silicon in an amount in the range of 4 to 14% by weight, and a further layer comprising nickel on the outer surface of the aluminium clad layer such that taken together the aluminium clad layer and all layers exterior thereto form a filler metal for a brazing operation, and wherein the brazing sheet product has an improved post-braze corrosion resistance when measured in a SWAAT-test in accordance with ASTM G-85.
It is a further object of the present invention to provide a method of manufacturing the brazing product, ideally in the form of a sheet product.

In accordance with the invention in one aspect there is provided a brazing sheet product comprising a core sheet, on at least one side of the core sheet a clad layer made of an aluminium alloy containing silicon in an amount in the range of 4 to 14% by weight, the clad layer (5) being coupled to a diffusion layer comprising nickel-tin alloy in the pre-braze condition.

According to another aspect of the invention a brazing product comprises a layer of aluminium alloy containing silicon in an amount in the range of 4 to 14 % by weight, which is coupled to and outer diffusion layer comprising a nickel-tin alloy in the pre-braze condition.

By the addition of tin as important alloying element to the filler metal in the appropriate mol-ratio with respect to the nickel an improved corrosion performance is being obtained of the brazing product in a post-braze condition. In the brazing product according to the invention post-braze corrosion lifetimes without perforations according to ASTM G-85 exceed 7 days. The product can be fluxless brazed under controlled atmosphere conditions in the absence of a brazing flux material while achieving very good post-braze corrosion performance enhancing the possibilities of application of the Ni-plated brazing product.

The invention is based in part on the insight that it is believed that the cathodic reaction governs the overall corrosion rate of Ni-plated brazing products when tested in the SWAAT-test in accordance with ASTM G-85. It is speculated that the cathodic reaction in this system appears to be the Hydrogen Evolution Reaction ("HER"). When Ni-plated brazing products such as brazing sheets are being subjected to a brazing operation, typically a fluxless CAB operation, small Ni-aluminide particles are being formed which are believed to catalyse the HER. By the addition of tin in a sufficient amount to the metal filler and having a lower exchange current density for the HER as compared to nickel-aluminides the catalyst effect is reduced and the post-braze corrosion performance of the brazed product is improved remarkably.

It is believed that an upper layer of pure tin metal is sensitive to progressive oxidation in pre-braze conditions under humid conditions, e.g. during transport of a plated coil to a customer. The surface oxides formed adversely influence the brazing process. By providing the tin required to improve the post-braze corrosion performance in the form of a nickel-tin diffusion layer, preferably obtained by a diffusion annealing treatment, no free tin is available anymore and thereby the occurrence of the detrimental progressive oxidation of the tin is avoided. It has been found that a Ni-Sn alloy layer forms a thin stable surface oxide film in air.

Preferably, between the Ni-Sn alloy diffusion layer and the clad layer there is present a layer of nickel or nickel-alloy, preferably lead-free from an environmental point of view, to initiate the reaction, presumably exothermic, with the underlying AlSi-alloy during the brazing operation. This reaction does not occur, or at least to a significant lesser extent, if alloying elements such as tin in a too high an amount are present. Therefore, the nickel layer between the clad layer and the Ni-Sn alloy diffusion layer comprises of 96% by weight or more of nickel, and is preferably tin-free. The thickness of this nickel layer does not need to be very large, and is preferably 0.4 micron at most. The thin layer of nickel or nickel-alloy may optionally contain bismuth as an alloying element in a range of up to 4% by weight to lower the surface tension of the molten filler metal during a brazing operation.

In an embodiment of the brazing sheet product the AlSi-alloy clad layer and all layers exterior thereto form the metal filler for a brazing operation and have a composition with the proviso that the mol-ratio of Ni:Sn is in the range of 10:(0.5 to 9), and preferably in the range of 10:(0.5 to 6). When the mol-ratio is too low no significant improvement in the post-braze corrosion life may be found. It has been found that if the mol-ratio becomes more than 10:6, than the brazeability becomes less efficient, while at a mol-ratio of more than 10:9 the brazeability becomes very poor.

An embodiment of the brazing sheet product according to the invention is further characterized by an optional thin layer comprising zinc as an intermediate bonding layer between the outer surface of the AlSi-alloy clad layer and the thin layer comprising nickel or nickel-alloy. With the zinc comprising intermediate bonding layer a very effective bond between the AlSi-alloy clad layer and the thin layer comprising nickel is formed, the bond remaining effective during subsequent deformation of the brazing product, for example in a bending operation. Preferably the intermediate bonding layer has a thickness of at most 0.5µm, more preferably at most 0.3µm (300nm), and most preferably in the range of 0.01 to 0.15µm (10-150nm). In the best results obtained a thickness of about 30nm has been used. It has been found that the thin bonding layer of zinc has no detrimental effect on the post-braze corrosion performance of the product according to the invention.

In an embodiment of the brazing sheet product the core sheet is an aluminium alloy, and is preferably of an AA3xxx, or AA5xxx, or AA6xxx-series aluminium alloy.

In accordance with the invention in another aspect there is provided a method of manufacturing an aluminium brazing product, which method comprises the steps of: (a) providing an aluminium base substrate of an aluminium alloy comprising silicon in an amount in the range of 4 to 14% by weight, (b) plating a metal layer comprising nickel or nickel alloy onto at least one outersurface of the aluminium base substrate, (c) plating a further metal layer comprising tin or tin-alloy onto the outersurface of the layer comprising nickel or nickel alloy, and (d) subjecting the plated brazing product to an annealing treatment by holding the plated brazing product at a temperature in the range of 100 to 500°C for a period of 1 sec. to 300 minutes to form a diffusion layer comprising nickel-tin alloy.

The annealing treatment achieves the effect that the applied tin layer diffuses into the applied nickel layer to form a Ni-Sn alloy layer. It is believed that an upper layer of pure tin metal is sensitive to progressive oxidation in pre-braze conditions under humid conditions. The surface oxides formed adversely influence the brazing process. By providing the tin required to improve the post-braze corrosion performance in the form of a nickel-tin diffusion layer essentially no free tin is available anymore, and thereby the occurrence of the detrimental progressive oxidation of the tin is avoided. It has been found that a Ni-Sn alloy layer forms a thin stable surface oxide film in air. Further oxidation in air takes place essentially only at temperatures above about 320°C. Further oxidation in air is substantially avoided at temperatures below about 320°C.

The melting point of tin is about 232°C. The annealing treatment may be carried out below the melting temperature of tin, but requiring prolonged soaking time up to 300 minutes. The annealing treatment may be carried out also above the melting temperature of tin, for example at about 250°C or about 300°C, whereby the tin diffuses into the solid nickel or nickel-alloy layer .Preferred annealing treatments are at a temperature in a range of 230 to 350°C for a soaking time of 1 sec. to 600 sec., and more preferably 1 sec. to 300 sec.

The annealing treatment is preferably carried out in a protective environment preventing the oxidation of tin or tin-alloy, such as a dry air atmosphere, or nitrogen gas atmosphere or an HNₓ-atmosphere or argon gas atmosphere or combinations thereof.

In an embodiment, taken together the aluminium base substrate and all layers exterior thereto form a metal filler for a brazing operation and together have a composition comprising at least, by weight percent:
Si in the range of 5 to 14 %,
Ni in the range of 0.03 to 8%,
Sn in the range of 0.01 to 7%,
Bi in the range of at most 0.3%,
Sb in the range of at most 0.3%,
Zn in the range of at most 0.3%,
Mg in the range of at most 5%,
balance aluminium and inevitable impurities,
and with the proviso that the mol-ratio of Ni:Sn is in the range of 10:(0.5 to 9), and preferably in the range of 10:(0.5 to 6).

A typical impurity element in the filler metal is iron, in particular originating from the AlSi-alloy substrate or AlSi-alloy clad layer, and which may be tolerated up to about 0.8 %. Other alloying elements may be present, and will typically originate from the aluminium base substrate or alternatively the aluminium clad layer. Typically each impurity element is present in a range of not more than 0.05 %, and the total of the impurity elements does not exceed 0.3%.

When the mol-ratio is too low no significant effect on the post-braze corrosion life may be found. If the mol-ratio of Ni:Sn becomes more than 10:6, than the brazeability becomes less efficient, while at a mol-ratio of more than 10:9 the brazeability becomes very poor.

Depending on the Ni:Sn ratio applied, the diffusion annealing treatment is to form also a layer comprising nickel on the outersurface of the aluminium base substrate layer and the diffusion layer comprising nickel-tin alloy on the outersurface of the layer comprising nickel. During the diffusion annealing treatment the plated tin diffuses from above into the plated nickel or nickel-alloy layer, thereby leaving part of the underlying nickel layer located close to the clad layer unalloyed. This unalloyed nickel layer, or at least not alloyed with tin, is preferred because it initiates the presumed exothermic reaction, better than an alloyed layer, with the underlying AlSi-alloy during the brazing operation. This reaction does to a significant, although lesser, extent occur, if alloying elements such as tin are present in too high an amount. The diffusion annealed Ni-Sn alloy layer typically has a thickness in the range of about 0.2 to 0.6µm.

Preferably in the brazing product according to the invention the plated layer comprising nickel or nickel-alloy having 90% or more of nickel, e.g. Ni-Bi, has a thickness of at most 2.0µm, preferably at most 1.0µm, and more preferably in the range of 0.05 to 0.5µm. A coating thickness of more than 2.0µm requires a prolonged treatment time for plating, and may result in wrinkling of the molten filler metal during a subsequent brazing operation. A preferred minimum thickness for this nickel-containing layer is about 0.25µm. Also, other techniques such as dipping, thermal spraying, CVD, PVD or other techniques for depositing of metals or metal alloys from a gas or vapour phase may be used. Preferably the nickel comprising layer is essentially lead-free.

In the brazing product according to the invention, the layer comprising tin or tin-alloy having 90% or more of tin, has a thickness prior to the diffusion annealing adjusted to the desired mol-ratio of Ni:Sn. This tin layer is preferably applied by means of plating. But also other techniques such as dipping, thermal spraying, CVD, PVD or other techniques for depositing of metals or metal alloys from a gas or vapour phase may be used.

In an embodiment the brazing product is elongated aluminium alloy stock, e.g. aluminium alloy sheet or strip, aluminium alloy wire or aluminium alloy rod.

In an embodiment the aluminium substrate is made of an AA4xxx-series aluminium alloy sheet or strip having Si as the most important alloying element in the range of 4 to 14% by weight, more preferably 7 to 14%, and can be plated on one or both surfaces with Ni or Ni-alloy, e.g. Ni-Bi alloy, and may be employed in subsequent brazing operations, in particular in an inert atmosphere brazing operation in the absence of a brazing-flux material. In the AA4xxx-series alloy other alloying elements may be present to improve specific properties, such as Mg up to 5%, the balance is made by impurities each up to 0.05 wt.%, total up to 0.25 wt.%, and aluminium. Iron may usually be present as impurity in an amount of up to 0.8 wt.%.

Also, aluminium alloy wire or rods being made of an AA4xxx-series alloy may be plated with a Ni or Ni-alloy layer having 90% or more of nickel, e.g. Ni-Bi alloy, and subsequently employed in a brazing operation, in particular in an inert atmosphere brazing (CAB) operation in the absence of a brazing-flux material, and may also be employed as weld filler wire or weld filler rod in a welding operation.

In an embodiment the aluminium substrate is an aluminium alloy sheet coupled to a core sheet made of an aluminium alloy. In a further embodiment the AlSi-alloy clad layer has a thickness ranging from about 2 to 20% of the total thickness of the total brazing product thickness. Typical aluminium clad layer thickness is in the range of 40 to 80 micron. The aluminium core sheet has a thickness typically in a range of at most 5 mm, more preferably in the range of 0.1 to 2 mm.

In an embodiment the method according to the invention is further characterized by depositing a thin layer comprising zinc as an intermediate bonding layer between the outersurface of the AlSi-alloy layer and the thin layer comprising nickel or nickel-alloy. With the intermediate bonding layer a very effective bond between the AlSi-alloy layer and the thin layer comprising nickel is formed, the bond remaining effective during subsequent deformation of the brazing product, for example in a bending operation. The most suitable methods of applying such an intermediate layer of zinc is by means of direct or immersion plating. Preferably the applied intermediate bonding layer has a thickness of at most 0.5µm, more preferably at most 0.3µm (300nm), and most preferably in the range of 0.01 to 0.15µm (10-150nm). In the best results obtained a thickness of about 30nm has been used. A coating thickness of more than 0.5µm is thought to have no further advantages for improving the adhesion.

The invention further provides an assembly of components, for example a heat exchanger, typically for automotive applications, or a fuel cell, typically an electrochemical fuel cell, joined by brazing, whereby at least one of the components being a brazing sheet product as set out above or the brazing product obtained by the method set out above. The brazing operation is preferably carried out in an inert atmosphere (CAB) in the absence of a brazing flux material or under a vacuum.

In an embodiment there is provided a brazed assembly wherein at least one of the components to be joined by brazing is made of the brazing sheet product set out above or produced by the method in accordance with the invention described above, and at least one other component is made of steel, aluminised steel, stainless steel, plated or coated stainless steel, bronze, brass, nickel, nickel alloy, titanium, or plated or coated titanium.

The invention will now be illustrated by a non-limitative example and with reference to the drawing, wherein:

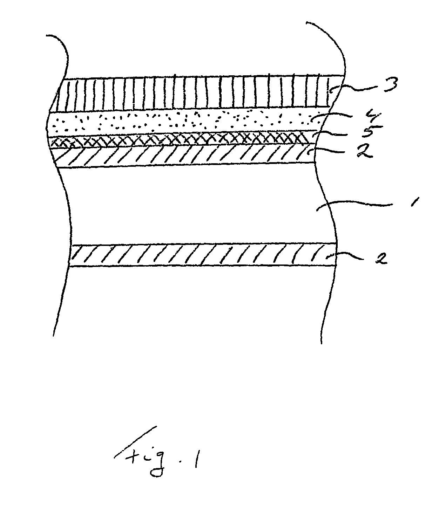

Fig 1 is a schematic longitudinal section showing the structure of a brazing sheet product according to the invention after a diffusion annealing treatment.

Fig. 1 shows schematically a brazing product, in the present case aluminium brazing sheet, in accordance with the present invention consisting of a core sheet 1 on one or both sides clad with an aluminium clad layer 2 comprising an Al-Si alloy (also known as aluminium base substrate) and the nickel-tin alloy diffusion layer 3 resulting from the diffusion annealing treatment of two separately applied metal layers of nickel or nickel-alloy and tin or tin-alloy, and the layer 4 comprising nickel or nickel-alloy which has not been alloyed as a result of the diffusion annealing treatment, and the optional bonding layer 5 of zinc is applied, the advantages of which are set out above. In Fig. 1 the layers 3, 4 and 5 have been shown on only one side of the brazing sheet, but it will be immediately apparent to the skilled person that they may also be applied on both sides of the brazing sheet product. Thus, if desired, the clad layer 2 shown to only contact the core 1, may be further provided with other layers, e.g. 3 and 4, and optionally also with 5.

### EXAMPLE

On a laboratory scale tests were carried out on aluminium brazing sheets manufactured from an AA3003 core alloy roll clad on both sides with an AA4045 clad alloy, and having a total thickness of 0.5 mm and a clad layer thickness of 50 microns on both sides. The following sequential pre-treatment steps have been used for each sample:
- cleaning by immersion for 180 sec. at 50°C in ChemTec 30014 bath (a commercial available bath), followed by rinsing,
- alkaline etching for 20 sec. at 50°C in ChemTec 30203 bath (a commercial available bath), followed by rinsing,
- desmutting for 60 sec. at room temperature in an acidic oxidizing solution, typically 50% nitric acid, followed by rinsing,
- zincate immersion using ChemTec 19023 bath (a commercial available zincate bath) for 60 sec. at room temperature resulting in a thin zinc layer having a thickness of about 30 nm, followed by rinsing.

Following the above pre-treatment on both sides firstly a nickel layer of 0.5 micron thickness (4.45 g/m²) was applied by means of electroplating, and on top of the applied nickel layer a tin layer was applied also by means of electroplating of various thickness of 0.9, 1.8 and 3.0 g/m² (see Table 1).

The composition of nickel plating bath was a known Wath-bath comprising:

| | |
|---|---|
| 270 g/l | NiSO₄.6H₂O |
| 50 g/l | NiCl₂.6H₂O |
| 30 g/l | H₃BO₃ |

The tin plating bath was a commercial available Methane Sulfonic Acid ("MSA") bath called RONASTAN (trade mark) supplied by Shipley Ronal, and having the composition:

| | |
|---|---|
| 25 g/l | Sn |
| 60 g/l | MSA of 0.84 M. |
| 3.5 g/l | sulphuric acid |
| 45 ml/l | additive TP |
| 4.5 ml/l | anti-oxidant TP |

Following the plating of the metal layers, the plated brazing sheet product was diffusion annealed for 8 minutes at 250°C under a protective inert nitrogen atmosphere to form a Ni-Sn diffusion layer. The diffusion annealed panels looked silvery and shiny. Samples of the diffusion-annealed products were analysed by Glow Discharge Optical Emission Spectroscopy ("GDOES"). The GDOES depth profiles showed that the tin was completely alloyed with the nickel after the diffusion annealing treatment. There was no free tin present anymore. The resulting Ni-Sn alloy diffusion layer was mainly composed of the equilibrium phase Ni₃Sn₄. Underneath the Ni-Sn alloy diffusion layer there was a tin-free nickel layer of about 0.35 micron thick and having the composition of the originally plated nickel layer-prior-to the diffusion annealing treatment and had not been alloyed with the tin as result of the diffusion annealing treatment. Repeating the diffusion annealing at 250°C in open air did not result in the detection of any detrimental oxides.

The plated specimens have been tested for adhesion using the Erichsen dome test (5mm), and the T-bend test. A value assessment is then given to the adhesion of poor, fair, or good. All samples tested had a good adhesion performance.

For the assessment of the post-braze corrosion resistance, the samples have been subjected to a simulated brazing cycle. The samples were heated under flowing nitrogen, with heating from room temperature to 580°C, dwell time at 580°C for 2 minutes, cooling from 580°C to room temperature. All samples had an excellent brazeability. Following the brazing cycle four samples of each type of plated brazing sheet have been tested in a SWAAT until the first perforations expressed in days of testing appear according to ASTM G-85, and the individual results are given in Table 1. The dimensions of the samples for the SWAAT-test were 100mmx50mm.

As a reference it is mentioned that typically aluminium brazing sheets manufactured from an AA3003 core alloy clad on both sides with an AA4045 clad alloy, and having a total thickness of 0.5 mm and a clad layer thickness of 50 microns each and devoid of any further metal layers have a SWAAT-test performance of more than 16 days without perforations.

As a further reference material also brazing sheet product (same core and clad layer composition and thickness) with a thin zinc bonding layer and only a NiBi-alloy electroplated layer manufactured according to the example of the international PCT application no. WO-01/88226, J.N. Mooij *et al.,* and incorporated herein by reference, has been tested for its corrosion performance.

For this example all products tested had the same AA3003-series core alloy.

| Table 1. Post-braze SWAAT-test results. | | | | | | |
|---|---|---|---|---|---|---|
| **Sample no.** | **Alloy System** | **Amount of Sn (g/m**^{**2**}**)** | **Atomic -% Sn*** | **Mol ratio Ni:Sn** | **Days till first perforation** | **Average over 4 samples** |
| 1 | NiBi | - | - | - | 4 | |
| 2 | NiBi | - | - | - | 4 | |
| 3 | NiBi | - | - | - | 3 | |
| 4 | NiBi | - | - | - | 4 | 4 |
| 1 | Ni+Sn | 0.9 | 9.1 | 10:1 | 8 | |
| 2 | Ni+Sn | 0.9 | 9.1 | 10:1 | 5 | |
| 3 | Ni+Sn | 0.9 | 9.1 | 10:1 | 5 | |
| 4 | Ni+Sn | 0.9 | 9.1 | 10:1 | 6 | 6 |
| 1 | Ni+Sn | 1.8 | 16.7 | 10:2 | 7 | |
| 2 | Ni+Sn | 1.8 | 16.7 | 10:2 | 7 | |
| 3 | Ni+Sn | 1.8 | 16.7 | 10:2 | 7 | |
| 4 | Ni+Sn | 1.8 | 16.7 | 10:2 | 8 | 7 |
| 1 | Ni+Sn | 3.0 | 25.0 | 10:3.33 | 8 | |
| 2 | Ni+Sn | 3.0 | 25.0 | 10:3.33 | 7 | |
| 3 | Ni+Sn | 3.0 | 25.0 | 10:3.33 | 8 | |
| 4 | Ni+Sn | 3.0 | 25.0 | 10:3.33 | 10 | 8 |
| *atomic percent tin is the atomic percent of the tin relative to the combined total of the tin of the applied tin layer and nickel of the applied nickel layer. | | | | | | |

From the results of Table 1 it can be seen that a brazing sheet product known from the prior art and having a layer consisting of nickel with a small addition of bismuth as an alloying element has an average SWAAT-test result of 4 days. The application of a tin layer in an amount in accordance and after diffusion annealing in accordance with the invention results in a significant increase of the SWAAT-test performance, while maintaining a good adhesion performance and an excellent brazing performance. By increasing the amount of tin with respect to the amount of nickel an improved SWAAT-test performance is obtained. Tin may also reduce the surface tension of the molten metal filler during the brazing cycle and thereby improves the flowability of the molten filler metal. The amount of tin to improve on the post-braze corrosion performance is by far sufficient to overcome the need for the addition of bismuth or antimony or magnesium or lead added for the same purpose of reducing the surface tension. The combined addition of Sn with Bi and/or Sb and/or Mg and/or Pb remains still possible.

## Claims

1. A brazing sheet product comprising a core sheet (1), on at least one side of said core sheet (1) a clad layer (2) made of an aluminium alloy containing silicon in an amount in the range of 4 to 14% by weight, and coupled on at least one outersurface of said clad layer (2) in a pre-braze condition to a diffusion layer (3) comprising a nickel-tin alloy.

2. A brazing product comprising a layer (2) of an aluminium alloy containing silicon in an amount in the range of 4 to 14% by weight coupled in a pre-braze condition to an outer diffusion layer (3) comprising a nickel-tin alloy.

3. A brazing product according to claim 2, wherein the brazing product is elongated aluminium alloy stock, preferably selected from the group consisting of aluminium alloy sheet, aluminium alloy strip, aluminium alloy wire and aluminium alloy rod.

4. A brazing sheet product or brazing product according to any one claims 1 to 3, wherein said layer (2) or clad layer (2) and the diffusion layer (3) are coupled via a layer (4) comprising nickel or nickel-alloy between the outersurface the clad layer (2) and the diffusion layer (3).

5. A brazing sheet product or brazing product according to claim 4, wherein the layer (4) comprising nickel or nickel-alloy has a thickness of at most 0.4 micron.

6. A brazing sheet product or brazing product according to any one of claims 1 to 5, wherein the diffusion layer (3) has a thickness in a range of about 0.2 to 0.6 micron.

7. A brazing sheet product or brazing product according to any one of claims 1 to 6, wherein there is a layer (5) comprising zinc as a bonding layer between said outersurface of said clad layer (2) and said layer comprising nickel (4).

8. A brazing sheet product or brazing product according to claim 7, wherein said bonding layer (5) has a thickness of not more than 0.5 micron, and preferably said bonding layer (5) has a thickness of not more than 0.3 micron, and more preferably said bonding layer (5) has a thickness in the range of 0.41 to 0.15 micron.

9. A brazing sheet product according to any one of claims 1 or 4 to 8, wherein the core sheet (1) is made of an aluminium alloy, and preferably the core sheet (1) is made of an aluminium alloy selected from the group consisting of AA3xxx, AA5xxx and AA6xxx-series alloys.

10. A brazing sheet product or brazing product according to any one of claims 1 to 9, wherein the layer (2) or clad layer (2) and all layers (3,4,5) exterior thereto form a metal filler for a brazing operation and having a composition with the proviso that the mol-ratio of Ni:Sn is in the range of 10:(0.5 to 9), and preferably with the proviso that the mol-ratio of Ni:Sn is in the range of 10:(0.5 to 6).

11. A brazing sheet product or brazing product according to any one of claims 1 to 10, wherein the layer (2) or the clad layer (2) and all layers (3,4,5) exterior thereto form a metal filler for a brazing operation and having a composition comprising at least, by weight percent:
Si in the range of 5 to 14 %,
Ni in the range of 0.03 to 8%,
Bi in the range of at most 0.3%,
Sb in the range of at most 0.3%,
Sn in the range of 0.01 to 7%,
Zn in the range of at most 0.3%,
Mg in the range of at most 5%,
balance aluminium and inevitable impurities,
with the proviso that the mol-ratio of Ni:Sn is in the range of 10:(0.5 to 9).

12. A brazing sheet product according to any one of claims 1 or 4 to 11, wherein the brazing sheet product has a post-braze corrosion life of 7 days or more in a SWAAT-test with perforations in accordance with ASTM G-85.

13. A method of manufacturing of an aluminium brazing product, which method comprises the steps of:
(a) providing layer (2) of an aluminium alloy comprising silicon in an amount in the range of 4 to 14% by weight,
(b) applying a metal layer (4) comprising nickel or nickel-alloy onto at least one outersurface of the layer (2),
(c) applying a metal layer (3) comprising tin or tin-alloy onto the outersurface of the layer (4) comprising nickel or nickel-alloy, and
(d) subjecting the layers (2-4) prior to any brazing cycle to a diffusion annealing treatment by holding the layers (2-4) at a temperature in the range of 100 to 500°C for a period of 1 sec. to 300 minutes to form on the outersurface of transform the layers (2-4) into a diffusion layer (3) comprising nickel-tin alloy in a pre-braze condition.

14. A method according to claim 13, wherein the metal layer (4) comprising nickel or nickel-alloy is applied using a plating method, and preferably using an electrolytic plating method.

15. A method according to claim 13, wherein metal layer (4) comprising nickel or nickel-alloy is applied using a method selected from the group consisting of PVD, CVD, and thermal spraying.

16. A method according to any one of claims 13 to 15, wherein the metal layer comprising tin or tin-alloy is applied using a plating method, and preferably using an electrolytic plating method.

17. A method according to any one of claim 13 to 16, wherein metal layer comprising tin or tin-alloy is applied using a method selected from the group consisting of PVD, CVD, and thermal spraying.

18. A method according to any one of claims 13 to 17, wherein the diffusion annealing treatment is carried out in a protective atmosphere.

19. A method according to any one of claims 13 to 18, wherein the diffusion annealing treatment is carried out in a temperature range of 230 to 350°C.

20. A method according to claim 19, wherein the diffusion annealing treatment is carried out in a temperature range of 230 to 350°C for a soaking time in the range of 1 to 600 sec., and preferably for a soaking time in the range of 1 to 300 sec.

21. A method according to any one of claims 13 to 20, wherein the layer (2) and all layers exterior thereto form a metal filler for a brazing operation and having a composition with the proviso that the mol-ratio of Ni:Sn is in the range of 10:(0.5 to 9), and preferably with the proviso that the mol-ratio of Ni:Sn is in the range of 10:(0.5 to 6).

22. A method according to any one of claims 13 to 21, wherein taken together the layer (2) and all layers exterior thereto form a metal filler for a brazing operation and having a composition comprising at least, by weight percent:
Si in the range of 5 to 14 %,
Ni in the range of 0.03 to 8%,
Bi in the range of at most 0.3%,
Sb in the range of at most 0.3%,
Sn in the range of 0.01 to 7%,
Zn in the range of at most 0.3%,
Mg in the range of at most 5%,
balance aluminium and inevitable impurities,
with the proviso that the mol-ratio of Ni:Sn is in the range of 10:(0.5 to 9).

23. A method according to any one of claims 13 to 22, wherein the layer (2) is made of an AA4000-series aluminium alloy.

24. A method according to any one of claims 13 to 23, wherein the layer (2) is an aluminium alloy sheet coupled to a core sheet (1) made of an aluminium alloy to form a brazing sheet product, and preferably the core sheet (1) is made of an aluminium alloy selected from the group consisting of AA3xxx, AA5xxx and AA6xxx-series alloys.

25. A method according to any one of claims 13 to 24, wherein prior to plating according to step (b), there is deposited onto the outersurface of the aluminium layer (2) a bonding layer (5) comprising zinc.

26. A method according to claim 25, wherein prior to plating according to step (b), there is deposited onto the outersurface of the aluminium layer (2) a bonding layer (5) comprising zinc said bonding layer (5) having a thickness of not more than 0.5 micron, and preferably said bonding layer (5) having a thickness of not more than 0.3 micron.

27. A method according to any one of claims 13 to 26, wherein the diffusion annealing treatment is to form a layer (4) comprising nickel on the outersurface of said layer (2) and a diffusion layer (3) comprising nickel-tin alloy on the outersurface of said layer (4) comprising nickel.

28. A method according to any one of claims 13 to 27, wherein the diffusion layer (3) has a thickness in the range of about 0.2 to 0.6 micron.

29. An assembly of components to be joined by brazing, wherein at least one of said components being a brazing sheet product or brazing product according to any one of claims 1 to 12, or the product obtained by the method according to any one of claims 13 to 28.

30. An assembly according to claim 29, wherein the components are to be joined by means of a brazing operation in an inert atmosphere in the absence of a brazing flux material.

31. An assembly according to claim 29 or 30 wherein at least one other of said components comprises a material selected from the group consisting of steel, aluminised steel, stainless steel, plated or coated steel, plated or coated stainless steel, bronze, brass, nickel, nickel alloy, titanium, and plated or coated titanium.

## Patentansprüche

1. Hartlötblechprodukt mit einem Kernblech (1), wobei auf wenigstens einer Seite des Kernblechs (1) eine Plattierschicht (2) bestehend aus einer Aluminiumlegierung vorhanden ist, die Silizium in einer Menge im Bereich von 4 bis 14 Gew.-% enthält und an wenigstens einer Außenfläche der Plattierschicht (2) in einem Vorhartlötzustand an eine Diffusionsschicht (3), die eine Nickel-Zinn-Legierung enthält, gekoppelt ist.

2. Hartlötprodukt mit einer Schicht (2) aus einer Aluminiumlegierung, die Silizium in einer Menge im Bereich von 4 bis 14 Gew.-% enthält und in einem Vorhartlötzustand an eine äußere Diffusionsschicht (3), die eine Nickel-Zinn-Legierung enthält, gekoppelt ist.

3. Hartlötprodukt nach Anspruch 2, wobei das Hartlötprodukt gedehntes Aluminiumlegierungsmaterial ist, vorzugsweise ausgewählt aus der Gruppe bestehend aus Aluminiumlegierungsblech, Aluminiumlegierungsstreifen, Aluminiumlegierungsdraht und Aluminiumlegierungsstab.

4. Hartlötblechprodukt oder Hartlötprodukt nach einem der Ansprüche 1 bis 3, wobei die Schicht (2) oder die Plattierschicht (2) und die Diffusionsschicht (3) über eine Schicht (4), die Nickel oder eine Nickellegierung enthält, zwischen der Außenfläche der Plattierschicht (2) und der Diffusionsschicht (3) verbunden sind.

5. Hartlötblechprodukt nach Anspruch 4, wobei die Nickel oder eine Nickellegierungen enthaltende Schicht (4) eine Dicke von höchstens 0,4 µm hat.

6. Hartlötblechprodukt oder Hartlötprodukt nach einem der Ansprüche 1 bis 5, wobei die Diffusionsschicht (3) eine Dicke im Bereich von etwa 0,2 bis 0,6 µm hat.

7. Hartlötblechprodukt oder Hartlötprodukt nach einem der Ansprüche 1 bis 6, wobei eine Schicht (5) vorliegt, die Zink als Bindeschicht zwischen der Außenfläche der Plattierschicht (2) und der Nickel enthaltenden Schicht (4) enthält.

8. Hartlötblechprodukt oder Hartlötprodukt nach Anspruch 7, wobei die Bindeschicht (5) eine Dicke von nicht mehr als 0,5 µm hat, und vorzugsweise die Bindeschicht (5) eine Dicke von nicht mehr als 0,3 µm hat, und noch bevorzugter die Bindeschicht (5) eine Dicke im Bereich von 0,01 bis 0,15 µm hat.

9. Hartlötblechprodukt nach einem der Ansprüche 1 oder 4 bis 8, wobei das Kernblech (1) aus einer Aluminiumlegierung besteht, und das Kernblech (1) vorzugsweise aus einer Aluminiumlegierung besteht, die aus der Gruppe bestehend aus Legierungen der AA3xxx-, AA5xxx- und AA6xxx-Serie gewählt wurde.

10. Hartlötblechprodukt oder Hartlötprodukt nach einem der Ansprüche 1 bis 9, wobei die Schicht (2) oder Plattierschicht (2) und alle dazu äußeren Schichten (3, 4, 5) ein Metalllot für einen Hartlötvorgang bilden und eine Zusammensetzung mit der Maßgabe haben, dass das Mol-Verhältnis von Ni:Sn im Bereich von 10:(0,5 bis 9) liegt, und vorzugsweise mit der Maßgabe, dass das Mol-Verhältnis von Ni:Sn im Bereich von 10:(0,5 bis 6) liegt.

11. Hartlötblechprodukt oder Hartlötprodukt nach einem der Ansprüche 1 bis 10, wobei die Schicht (2) oder Plattierschicht (2) und alle dazu äußeren Schichten (3, 4, 5) ein Metalllot für einen Hartlötvorgang bilden und eine Zusammensetzung haben, die, in Gewichtsprozent, wenigstens enthält:
Si im Bereich von 5 bis 14%,
Ni im Bereich von 0,03 bis 8%,
Bi im Bereich von höchstens 0,3%,
Sb im Bereich von höchstens 0,3%,
Sn im Bereich von 0,01 bis 7%,
Zn im Bereich von höchstens 0,3%,
Mg im Bereich von höchstens 5%,
Restaluminium und unvermeidbare Verunreinigungen,
mit der Maßgabe, dass das Mol-Verhältnis von Ni:Sn im Bereich von 10:(0,5 bis 9) liegt.

12. Hartlötblechprodukt nach einem der Ansprüche 1 oder 4 bis 11, wobei das Hartlötblechprodukt nach dem Hartlöten eine Korrosionsbeständigkeit von 7 Tagen oder mehr in einem SWAAT-Test mit Perforationen gemäß ASTM G-85 hat.

13. Verfahren zur Herstellung eines Aluminiumhartlötprodukts, wobei das Verfahren die folgenden Schritte umfasst:
(a) Bereitstellen der Schicht (2) aus einer Aluminiumlegierung, die Silizium in einer Menge im Bereich von 4 bis 14 Gew.-% enthält,
(b) Aufbringen einer Metallschicht (4), die Nickel oder eine Nickellegierung enthält, auf wenigstens eine Außenfläche der Schicht (2),
(c) Aufbringen einer Metallschicht (3), die Zinn oder eine Zinnlegierung enthält, auf die Außenfläche der Schicht (4), die Nickel oder eine Nickellegierung enthält, und
(d) Unterziehen der Schichten (2 - 4), vor jedem Hartlötzyklus, einer Diffusionsglühbehandlung, indem die Schichten (2 - 4) bei einer Temperatur im Bereich von 100 bis 500°C über einen Zeitraum von 1 Sekunde bis 300 Minuten gehalten werden, um auf der Außenfläche die Schichten (2 - 4) in eine Diffusionsschicht (3) mit einer Nickel-Zinn-Legierung im Vorhartlötzustand umzuwandeln.

14. Verfahren nach Anspruch 13, wobei die Metallschicht (4), die Nickel oder eine Nickellegierung enthält, mithilfe eines Plattierungsverfahrens aufgebracht wird, und vorzugsweise mithilfe eines elektrolytischen Plattierungsverfahrens.

15. Verfahren nach Anspruch 13, wobei die Metallschicht (4), die Nickel oder eine Nickellegierung enthält, mithilfe eines Verfahrens aufgebracht wird, das aus der Gruppe bestehend aus PVD, CVD und thermischem Spritzen gewählt wurde.

16. Verfahren nach einem der Ansprüche 13 bis 15, wobei die Metallschicht, die Zinn oder eine Zinnlegierung enthält, mithilfe eines Plattierungsverfahrens aufgebracht wird, und vorzugsweise mithilfe eines elektrolytischen Plattierungsverfahrens.

17. Verfahren nach einem der Ansprüche 13 bis 16, wobei die Metallschicht (4), die Nickel oder eine Nickellegierung enthält, mithilfe eines Verfahrens aufgebracht wird, das aus der Gruppe bestehend aus PVD, CVD und thermischem Spritzen gewählt wurde.

18. Verfahren nach einem der Ansprüche 13 bis 17, wobei die Diffusionsglühbehandlung in einer Schutzatmosphäre ausgeführt wird.

19. Verfahren nach einem der Ansprüche 13 bis 18, wobei die Diffusionsglühbehandlung in einem Temperaturbereich von 230 bis 350°C ausgeführt wird.

20. Verfahren nach Anspruch 19, wobei die Diffusionsglühbehandlung in einem Temperaturbereich von 230 bis 350°C für eine Durchwärmzeit im Bereich von 1 bis 600 Sekunden ausgeführt wird, und vorzugsweise für eine Durchwärmzeit im Bereich von 1 bis 300 Sekunden.

21. Verfahren nach einem der Ansprüche 13 bis 20, wobei die Schicht (2) und alle dazu äußeren Schichten ein Metalllot für einen Hartlötvorgang bilden und eine Zusammensetzung mit der Maßgabe haben, dass das Mol-Verhältnis von Ni:Sn im Bereich von 10:(0,5 bis 9) liegt, und vorzugsweise mit der Maßgabe, dass das Mol-Verhältnis von Ni:Sn im Bereich von 10 : (0,5 bis 6) liegt.

22. Verfahren nach einem der Ansprüche 13 bis 21, wobei die Schicht (2) und alle dazu äußeren Schichten zusammengenommen ein Metalllot für einen Hartlötvorgang bilden und eine Zusammensetzung aufweisen, die, in Gewichtsprozent, wenigstens enthält:
Si im Bereich von 5 bis 14%,
Ni im Bereich von 0,03 bis 8%,
Bi im Bereich von höchstens 0,3%,
Sb im Bereich von höchstens 0,3%,
Sn im Bereich von 0,01 bis 7%,
Zn im Bereich von höchstens 0,3%,
Mg im Bereich von höchstens 5%,
Restaluminium und unvermeidbare Verunreinigungen,
mit der Maßgabe, dass das Mol-Verhältnis von Ni:Sn im Bereich von 10:(0,5 bis 9) liegt.

23. Verfahren nach einem der Ansprüche 13 bis 22, wobei die Schicht (2) aus einer Aluminiumlegierung der AA4000-Serie besteht.

24. Verfahren nach einem der Ansprüche 13 bis 23, wobei das die Schicht (2) ein Aluminiumlegierungsblech ist, das an ein Kernblech (1) gekoppelt ist, das aus einer Aluminiumlegierung zur Bildung eines Hartlötblechprodukts besteht, und das Kernblech (1) vorzugsweise aus einer Aluminiumlegierung besteht, die aus der Gruppe bestehend aus Legierungen der AA3xxx-, AA5xxx- und AA6xxx-Serie gewählt wurde.

25. Verfahren nach einem der Ansprüche 13 bis 24, wobei vor der Plattierung gemäß Schritt (b) auf der Außenfläche der Aluminiumschicht (2) eine Zink enthaltende Bindeschicht (5) aufgebracht wird.

26. Verfahren nach Anspruch 25, wobei vor der Plattierung gemäß Schritt (b) auf der Außenfläche der Aluminiumschicht (2) eine Zink enthaltende Bindeschicht (5) aufgebracht wird, wobei die Bindeschicht (5) eine Dicke von nicht mehr als 0,5 µm hat, und die Bindeschicht (5) vorzugsweise eine Dicke von nicht mehr als 0,3 µm hat.

27. Verfahren nach einem der Ansprüche 13 bis 26, wobei die Diffusionsglühbehandlung dazu dient, eine Nickel enthaltende Schicht (4) auf der Außenfläche der Schicht (2) zu bilden und eine eine Nickel-Zinn-Legierung enthaltende Diffusionsschicht (3) auf der Außenfläche der Nickel enthaltenden Schicht (4) zu bilden.

28. Verfahren nach einem der Ansprüche 13 bis 27, wobei die Diffusionsschicht (3) eine Dicke im Bereich von etwa 0,2 bis 0,6 µm hat.

29. Anordnung von Bauteilen, die durch Hartlötung zu verbinden sind, wobei wenigstens einer der Bauteile ein Hartlötblechprodukt oder Hartlötprodukt nach einem der Ansprüche 1 bis 12 ist, oder das Produkt, das durch das Verfahren nach einem der Ansprüche 13 bis 28 erzielt wird.

30. Anordnung nach Anspruch 29, wobei die Bauteile mittels eines Hartlötvorgangs unter Schutzatmosphäre ohne ein Hartlötflussmittel zu verbinden sind.

31. Anordnung nach Anspruch 29 oder 30, wobei wenigstens einer der Bauteile ein Material enthält, das aus der Gruppe bestehend aus Stahl, aluminisiertem Stahl, rostfreiem Stahl, plattiertem oder beschichtetem rostfreien Stahl, Bronze, Messing, Nickellegierung, Titan und plattiertem oder beschichtetem Titan gewählt wurde.

## Revendications

1. Produit sous forme de tôle à brasage comprenant une tôle centrale (1), sur au moins une face de ladite tôle centrale (1) une couche plaquée (2) en alliage d'aluminium contenant du silicium à raison de 4 à 14% en poids, et associée sur au moins une surface extérieure de ladite couche plaquée (2) dans un état précédant le brasage avec une couche de diffusion (3) contenant un alliage de nickel-étain.

2. Produit à brasage comprenant une couche (2) en alliage d'aluminium contenant du silicium à raison de 4 à 14% en poids, associée, avant brasage, à une couche extérieure de diffusion (3) contenant un alliage de nickel-étain.

3. Produit à brasage selon la revendication 2, le produit à brasage étant un morceau d'alliage d'aluminium allongé, de préférence choisi dans le groupe comprenant une tôle en alliage d'aluminium, un feuillard en alliage d'aluminium, un fil en alliage d'aluminium et une baguette en alliage d'aluminium.

4. Produit sous la forme d'une tôle à brasage ou produit à brasage selon l'une quelconque des revendications 1 à 3, dans lequel ladite couche (2) ou la couche plaquée (2) et la couche de diffusion (3) sont associées par l'intermédiaire d'une couche (4) contenant du nickel ou un alliage de nickel entre la surface extérieure de la couche plaquée (2) et la couche de diffusion (3).

5. Produit en forme de tôle à brasage ou produit à brasage selon la revendication 4, dans lequel la couche (4) contenant du nickel ou un alliage de nickel a une épaisseur d'un maximum de 0,4 micromètre.

6. Produit en forme de tôle à brasage ou produit à brasage selon l'une quelconque des revendications 1 à 5, dans lequel la couche de diffusion (3) a une épaisseur de l'ordre d'environ 0,2 à 0,6 micromètre.

7. Produit en forme de tôle à brasage ou produit à brasage selon l'une quelconque des revendications 1 à 6, dans lequel se trouve une couche (5) contenant du zinc servant de couche de liaison entre ladite surface extérieure de ladite couche plaquée (2) et ladite couche (4) contenant du nickel.

8. Produit en forme de tôle à brasage ou produit à brasage selon la revendication 7, dans lequel ladite couche de liaison (5) a une épaisseur non supérieure à 0,5 micromètre, et de préférence ladite couche de liaison (5) a une épaisseur non supérieure à 0,3 micromètre, et de préférence encore ladite couche de liaison (5) a une épaisseur de l'ordre de 0,01 à 0,15 micromètre.

9. Produit en forme de tôle à brasage selon l'une quelconque des revendications 1 ou 4 à 8, dans lequel la tôle centrale (1) est en alliage d'aluminium, et de préférence la tôle centrale (1) est en alliage d'aluminium choisi dans le groupe comprenant des alliages des séries AA3xxx, AA5xxx et AA6xxx.

10. Produit en forme de tôle à brasage ou produit à brasage selon l'une quelconque des revendications 1 à 9, dans lequel la couche (2) ou la couche plaquée (2) et toutes les couches (3, 4, 5) extérieures par rapport à celle-ci forment un métal d'apport pour une opération de brasage, ayant une composition supposant un rapport molaire de Ni/Sn de l'ordre de 10/(0,5 à 9), et de préférence dans l'hypothèse que le rapport molaire de Ni/Sn est de l'ordre de 10/(0,5 à 6).

11. Produit en forme de tôle à brasage ou produit à brasage selon l'une quelconque des revendications 1 à 10, dans lequel la couche (2) ou la couche plaquée (2) et toutes les couches (3, 4, 5) extérieures par rapport à celle-ci forment un métal d'apport pour une opération de brasage ayant une composition comprenant au moins, en pourcentage de poids :
Si à raison de 5 à 14%,
Ni à raison de 0,03 à 8%,
Bi à raison d'un maximum de 0,3%,
Sb à raison d'un maximum de 0,3%,
Sn à raison de 0,01 à 7%,
Zn à raison d'un maximum de 0,3%,
Mg à raison d'un maximum de 5%,
le reste étant de l'aluminium et des impuretés inévitables,
dans l'hypothèse que le rapport molaire de Ni/Sn est de l'ordre de 10/(0,5 à 9).

12. Produit en forme de tôle à brasage selon l'une quelconque des revendications 1 ou 4 à 11, le produit en forme de tôle à brasage ayant une résistance à la corrosion après brasage de 7 jours ou plus lors d'un essai SWAAT à perforations conformément à la norme ASTM G-85.

13. Procédé de fabrication d'un produit à brasage en aluminium, lequel procédé comprend les étapes consistant à:
(a) réaliser une couche (2) d'alliage d'aluminium contenant du silicium à raison de 4 à 14% en poids,
(b) appliquer une couche métallique (4) contenant du nickel ou un alliage de nickel sur au moins une surface extérieure de la couche (2),
(c) appliquer une couche métallique (3) contenant de l'étain ou un alliage d'étain sur la surface extérieure de la couche (4) contenant du nickel ou un alliage de nickel, et
(d) soumettre les couches (2-4), avant tout cycle de brasage, à un traitement par recuit de diffusion en maintenant les couches (2-4) à une température de l'ordre de 100 à 500°C pendant une période de 1 s à 300 minutes pour former sur la surface extérieure des couches (2-4) une couche de diffusion (3) contenant un alliage de nickel-étain avant brasage.

14. Procédé selon la revendication 13, dans lequel la couche métallique (4) contenant du nickel ou un alliage de nickel est appliquée à l'aide d'un procédé de plaquage, et de préférence à l'aide d'un procédé de plaquage électrolytique.

15. Procédé selon la revendication 13, dans lequel la couche métallique (4) contenant du nickel ou un alliage de nickel est appliquée à l'aide d'un procédé choisi dans le groupe comprenant le DVP, le DVC et la pulvérisation thermique.

16. Procédé selon l'une quelconque des revendications 13 à 15, dans lequel la couche métallique contenant de l'étain ou un alliage d'étain est appliquée à l'aide d'un procédé de plaquage, et de préférence à l'aide d'un procédé de plaquage électrolytique.

17. Procédé selon l'une quelconque des revendications 13 à 16, dans lequel la couche métallique contenant de l'étain ou un alliage d'étain est appliquée à l'aide d'un procédé choisi dans le groupe comprenant le DVP, le DVC et la pulvérisation thermique.

18. Procédé selon l'une quelconque des revendications 13 à 17, dans lequel le traitement par recuit de diffusion est réalisé sous une atmosphère protectrice.

19. Procédé selon l'une quelconque des revendications 13 à 18, dans lequel le traitement par recuit de diffusion est réalisé à une température de 230 à 350°C.

20. Procédé selon la revendication 19, dans lequel le traitement par recuit de diffusion est réalisé à une température de 230 à 350°C pendant un temps d'immersion de 1 à 600 s et de préférence pendant un temps d'immersion de 1 à 300 s.

21. Procédé selon l'une quelconque des revendications 13 à 20, dans lequel la couche (2) et toutes les couches extérieures par rapport à celle-ci forment un métal d'apport pour une opération de brasage, ayant une composition dans l'hypothèse que le rapport molaire de Ni/Sn est de l'ordre de 10/(0,5 à 9) et de préférence dans l'hypothèse que le rapport molaire de Ni/Sn est de l'ordre de 10/(0,5 à 6).

22. Procédé selon l'une quelconque des revendications 13 à 21, dans lequel la couche (2) et toutes les couches extérieures par rapport à celle-ci forment conjointement un métal d'apport pour une opération de brasage ayant une composition comprenant au moins, en pourcentage de poids :
Si à raison de 5 à 14%,
Ni à raison de 0,03 à 8%,
Bi à raison d'un maximum de 0,3%,
Sb à raison d'un maximum de 0,3%,
Sn à raison de 0,01 à 7%,
Zn à raison d'un maximum de 0,3%,
Mg à raison d'un maximum de 5%,
le reste étant de l'aluminium et des impuretés inévitables,
dans l'hypothèse que le rapport molaire de Ni/Sn est de l'ordre de 10/(0,5 à 9).

23. Procédé selon l'une quelconque des revendications 13 à 22, dans lequel la couche (2) est en alliage d'aluminium de la série AA4000.

24. Procédé selon l'une quelconque des revendications 13 à 23, dans lequel la couche (2) est une tôle en alliage d'aluminium associée avec une tôle centrale (1) en alliage d'aluminium pour former un produit en forme de tôle à brasage, et de préférence la tôle centrale (1) est en alliage d'aluminium choisi dans le groupe comprenant les alliages des séries AA3xxx, AA5xxx et AA6xxx.

25. Procédé selon l'une quelconque des revendications 13 à 24, dans lequel, avant le plaquage selon l'étape (b), sur la surface extérieure de la couche (2) en aluminium est déposée une couche de liaison (5) contenant du zinc.

26. Procédé selon la revendication 25, dans lequel, avant le plaquage selon l'étape (b), sur la surface extérieure de la couche (2) en aluminium est déposée une couche de liaison (5) contenant du zinc, ladite couche de liaison (5) ayant une épaisseur maximale de 0,5 micromètre, et de préférence ladite couche de liaison (5) ayant une épaisseur maximale de 0,3 micromètre.

27. Procédé selon l'une quelconque des revendications 13 à 26, dans lequel le traitement par recuit de diffusion vise à former une couche (4) contenant du nickel sur la surface extérieure de ladite couche (2) et une couche de diffusion (3) contenant un alliage de nickel-étain sur la surface extérieure de ladite couche (4) contenant du nickel.

28. Procédé selon l'une quelconque des revendications 13 à 27, dans lequel la couche de diffusion (3) a une épaisseur de l'ordre d'environ 0,2 à 0,6 micromètre.

29. Ensemble de pièces à réunir par brasage, dans lequel au moins une desdites pièces est un produit en forme de tôle à brasage ou un produit à brasage selon l'une quelconque des revendications 1 à 12, ou le produit obtenu par le procédé selon l'une quelconque des revendications 13 à 28.

30. Assemblage selon la revendication 29, dans lequel les pièces sont à réunir par une opération de brasage sous une atmosphère inerte en l'absence d'un fondant de brasage.

31. Ensemble selon la revendication 29 ou 30, dans lequel au moins une autre desdites pièces contient une matière choisie dans le groupe comprenant l'acier, l'acier aluminisé, l'acier inoxydable, l'acier plaqué ou revêtu, l'acier inoxydable plaqué ou revêtu, le bronze, le laiton, le nickel, l'alliage de nickel, le titane et le titane plaqué ou revêtu.
